# EUROPEAN PATENT APPLICATION

(11) **EP 1 630 671 A1**
(43) Date of publication of application: **01.03.2006**
(21) Application number: 04104060.1
(22) Date of filing: 24.08.2004
(51) Int. Cl.: G06F 9/46

(54) **Framework for pluggable schedulers**

(71) Applicant: International Business Machines Corporation, Armonk, N.Y. 10504 (US)
(72) Inventor: GARGYA, Tony, 72076, Tuebingen (DE); ROST, Steffen, 71154, Nufringen (DE); NEUKOETTER, Andreas, 71088, Holzgerlingen (DE); SZERMUTZKY, Marek, 71101, Schoenaich (DE)
(74) Representative: Klein, Hans-Jörg

(57) **Abstract**

The invention relates to a method and a scheduling system for scheduling a job, the job having at least one job requirement and being indicative of a scheduling policy of at least first and second scheduling policies, the method comprising the steps of:
- performing a query in order to identify data processing resources matching the at least one job requirement and obtaining input data for the selected scheduling policy,
- selecting one of the matching resources by means of the selected scheduling policy on the basis of the input data.

## Description

### Field of the invention

The present invention relates to the field of distributed computing, in which computational capacity is provided on demand by a grid combining resources and capacities of a plurality of data processing devices.

### Background and prior art

Distributed computing is based on the combination of a large number of computers forming a so-called grid and thus providing vast computational power and huge storage capacity comparable to a super computer. A computationally intensive job requiring a long processing time can effectively be segmented and distributed to a number of computers belonging to the grid. Since the single computers now simultaneously process a part of the computationally intensive job, the overall processing time of the job reduces by a factor. In general the processing time reduces as the number of computers within the grid increases.

In combining computational resources within a grid, extreme time consuming and extreme resource demanding computational jobs, such as e.g. in the framework of particle physics, digital sky survey or even search for extra terrestrial life can be performed cost efficiently within a relatively short time.

One idea to implement a computational grid is based on the Internet connecting millions of personal computers that are idle during most of their operation time. A huge amount of computational resources is therefore wasted. By means of distributed computing idle computers could be applied worldwide to time consuming and computationally intensive jobs in the framework of scientific research for example. In this way distributed computing harnesses idle computational resources of a global network and thus provides a global super computer.

In a further step the principle of distributed computing motivates the vision of virtualized computing. Irrespectively of the configuration and the performance of its own computer system, a user can call on computational resources that are assembled from multiple suppliers forming the grid. The suppliers are typically the computer systems of other users participating to the grid. In the same way as the single users contribute to the grid, they also exploit the computational power of the grid. The huge assembled computational power of the grid can dynamically be shared by the single users depending on their demands.

The distribution of computationally intensive jobs to the various computer systems of a grid is typically handled by a scheduler. The scheduler has a key function for the grid, since it allocates idle system resources for the processing of computational jobs. Furthermore the scheduler determines at which time a certain job is to be processed by a distinct processing resource. On the one hand the scheduling has to be performed in such a way that the execution time of each job is as small as possible, while on the other hand the computational work is equally distributed among the single processing resources of the grid.

The crucial task of scheduling is typically divided in three steps. In the first step the scheduler has to find potential resources of the grid that are capable to process a certain job. In the second step the scheduler determines one or several of the processing resources to process the job in such a way that the computational capacity of the grid is used most effectively. In the third step the job is submitted to the determined processing resources in order to process the job.

The overall performance of a grid strongly depends on the scheduling of the jobs based on a scheduling policy. There exist various scheduling policies designated to different types of computational jobs.

For example the LoadLeveler default scheduling policy developed by the IBM Corporation always processes the first jobs of a job queue. As soon as the resource requirements of a job are fulfilled by the grid the job is submitted to an appropriate computational resources. When for example a job requires several resources simultaneously, i.e. a job requires parallel execution, the scheduler has to allocate a certain number of computational resources. The execution of the job starts no sooner than the scheduler has allocated the required number of resources.

This scheduling policy has the disadvantage that the load of the grid decreases as soon as a parallel computing job has to be processed by the grid. Furthermore the problem arises, that a job can only allocate a resource for a distinct period of time. A potential problem arises when this period of time is larger than the time needed to allocate the required number of resources.

The BACKFILL scheduler is based on a different scheduling policy. This scheduling policy determines the time which is needed by a certain resource in order to execute a job. Since the scheduling policy has knowledge of the execution time of the single jobs it can reserve a certain number of computational resources executing the appropriate jobs in the future. Potential gaps in the execution timetable can therefore effectively be filled by the execution of those jobs requiring an execution time that fits into the gap.

Attention has to be paid that these preceded jobs do not overlap with those jobs that reserve a certain time period in the execution timetable.

The GANG scheduling policy provides a possibility to execute a plurality of jobs simultaneously on a set of computational resources. The execution time is divided into single time slots. After a time slot has passed the single resources interchange their assigned jobs. In this way a dynamical behaviour is implemented into the grid. The user has the possibility to prioritize or to cancel certain jobs during run time.

The principle of distributed computing or grid computing is applied to a multiplicity of different jobs with different properties and different requirements for the executing resources. For example the SETI@HOME project (http://setiathome.ssl.berkeley.edu/) for the search of extra terrestrial intelligence requires distributed super computing. The job is segmented into several sub-jobs that require only a high computing capacity.

Cryptographical problems for example also require a high data transfer rate which requires a different type of grid or a different type of scheduling policy. A grid for providing computational resources on demand may comprise a different system architecture as well as a different scheduling policy.

Nowadays distributed computing systems or grid computing systems are designed to execute a certain type of job. Therefore they are based on a distinct system architecture as well as on a single distinct scheduling policy. They are optimized to process only a certain type of job. If universally applied to different jobs with different requirements those grids become rather ineffective.

The present invention aims to provide a framework for pluggable scheduling policies that allows to universally and effectively adapt a grid computing system to a variety of jobs requiring different computational resources and different scheduling policies.

### Summary of the invention

The invention provides a framework for pluggable scheduling policies for a distributed computing system. Depending on the requirements of a huge variety of different jobs, different pluggable scheduling policies can be implemented into the system to provide a most efficient usage of the given system resources.

In accordance with a preferred embodiment of the invention the assignment of a job to a certain processing resource within a grid of processing resources is handled by a scheduler framework. The scheduling framework has access to a variety of different scheduling policies. According to the job requirements and a selected scheduling policy the scheduling policy determines a single or several processing resources to which the job is to be transmitted for execution purposes.

The single data processing resources send required information about their system status and configuration to the database. The scheduler first performs a database query of the data processing resources of the grid in order to identify those data processing resources that match the job requirements.

In a next step the scheduler creates a list containing those data processing resources that match the distinct job requirements. The job requirements also can contain information about a certain scheduling policy that has to be applied to the created list of matching data processing resources.

Applying the selected scheduling policy to the list of matching data processing resources, determines a single or several data processing resources to which a job will be submitted in a next step. In this way an effective processing of a distinct job as well as an effective distribution of processing work within the grid is guaranteed. In such a case where the job requirements do not specify a distinct scheduling policy, the scheduling framework makes use of a default scheduling policy.

In accordance to a preferred embodiment of the invention, the job requirements specify the properties, that a data processing resource of the grid has to provide in order to be able to process the job. The job requirements typically describe which storage capacity or which computing power a distinct data processing resource has to provide. A job may further require a distinct operation system and a job may further be designated to a distinct software product.

The job requirements further describe whether the job preferably requires computational power or high data transfer rates or whether the job requires certain computational capacities only temporary or constantly. In order to account for this classification of different types of jobs, the job requirements further indicate a distinct scheduling policy that has to be applied by the scheduler in order to determine the executing data processing resource for the job.

In accordance to a further preferred embodiment of the invention the single data processing resources of the grid provide appropriate system specifications to the database. Since the system specifications of the data processing resources and the job requirements have to be directly compared by the scheduler, the system specifications comprise information about the computational capacity, the storage capacity, the operation system, the software configuration and / or additional information for the scheduler about the availability of the distinct resource.

According to a further preferred embodiment of the invention the single system specifications of each data processing resource of the grid are collected in a central database. The central database in turn then provides the required information to the scheduler. In this way the central database stores the system specifications of the entire grid.

According to a further preferred embodiment of the invention, the scheduling policies are represented by pluggable program modules. This allows to add and to remove different scheduling policies to the scheduling framework. In this way the scheduler framework and the scheduling policies can be universally adapted to different kinds of scheduling requirements.

According to a further preferred embodiment of the invention the information of the system specifications of the single data processing resources of the grid is not necessarily stored in one central database but in a set of databases that are each connected to the scheduling framework. Each single database provides the complete system specifications of a single data processing resource or a group of several data processing resources.

Furthermore a single database may provide only distinct system specifications of a group of data processing resources. In this way a single database may contain only one specification of all data processing resources of the grid. When for example a job only requires a distinct operation system the scheduler needs only information about the operation systems of the single data processing resources of the grid. This required information can for example be provided by a single database. In this way the scheduler only receives the required and no unnecessary information from the database.

According to a further preferred embodiment of the invention, the single databases are pluggable to the scheduling framework. Depending on the specific job requirements and the information content of the databases, databases containing unnecessary information can be removed from the system in the same way as additional databases can be attached to the scheduling framework.

In accordance to a further preferred embodiment of the invention, the different scheduling policies as well as the different databases can dynamically be removed from the system or attached to the system. The dynamic removal or the dynamic attachment can be performed during run time.

According to a further preferred embodiment of the invention the scheduler performs an additional query to the data processing resources when a job requires a distinct scheduling policy requiring additional information about the data processing resources of the grid. Typically the different scheduling policies require different information about the system specifications of the data processing resources. The missing system specifications about the data processing resources are then obtained via the additional query.

### Brief description of the drawings

In the following, preferred embodiments of the invention will be described in greater detail by making reference to the drawings in which:
- Figure 1: shows a block diagram of a scheduling system with pluggable scheduling policies,
- Figure 2: is illustrative of a flow chart of the scheduling method,
- Figure 3: shows a block diagram of a preferred embodiment of the invention,
- Figure 4: shows a detailed block diagram of a preferred embodiment of the invention.

### Detailed description

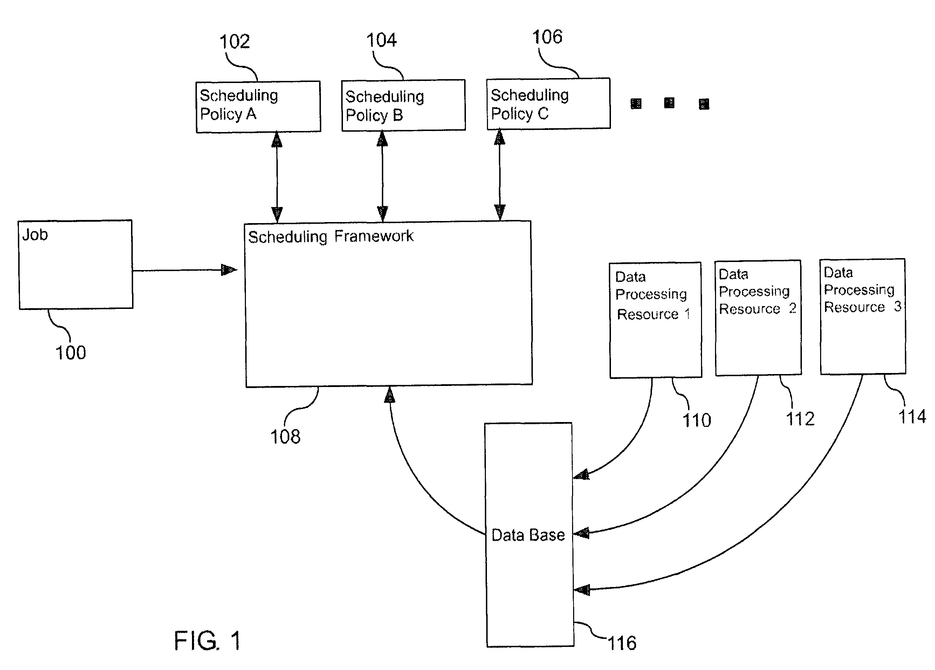

Figure 1 schematically shows a job 100 being passed to a scheduling framework 108. The scheduling framework 108 has access to scheduling policy A 102, scheduling policy B 104 and scheduling policy C 106. The data processing resources 110, 112 and 114 are linked to a central database 116, which in turn is connected to the scheduling framework108.

When for example a job 100 with a number of job requirements enters the scheduling framework 108, the scheduler performs a query in order to identify at least one of the data processing resources 110, 112 and 114 whose system specification matches the job requirements. The data processing resources 110, 112 and 114 send their respective system specifications to the central database 116, whether in regular time intervals or on request (Push or Pull). The desired system specifications are then stored in the central database 116 and submitted to the scheduling framework 108 based on the query.

The scheduling framework 108 compares the information provided by the database 116 with the job requirements. Furthermore the scheduling framework 108 creates a list of data processing resources whose system specifications match the requirements of the job 100. For instance when the job 100 has also specified a scheduling policy A 102, the scheduling framework 108 collects the information required by that scheduling policy A 102 and submits that information and the list of matching data processing resources to that scheduling policy A 102.

When the scheduling policy A 102 is applied to the list of matching data processing resources, the scheduling policy 102 determines a single or one of the data processing resources 110, 112 and 114, to which the job 100 has to be submitted by scheduling policy 102. The job 100 is then processed or executed by the determined data processing resource.

The single scheduling policies 102, 104 and 106 can dynamically be attached to the scheduling framework 108 as well as dynamically be removed from the scheduling framework 108. Furthermore additional scheduling policies not shown in figure 1 can be dynamically attached to the scheduling framework 108, when an additional scheduling policy is specified by the job requirements of the job 100.

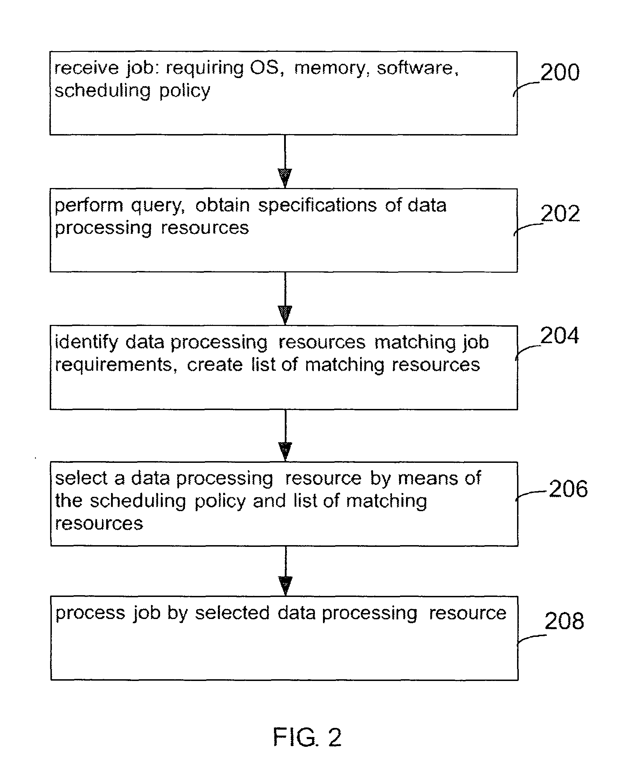

Figure 2 is illustrative of a flow chart representing the scheduling method of the invention. In step 200 the scheduler receives a job with job requirements such as operation system, memory, software specifications and a distinct scheduling policy. In step 202 the scheduler performs a query to all database resources of the grid. In response to the query, the scheduling framework obtains system specifications of all data processing resources. In step 204 the scheduler compares the obtained specifications of the data processing resources with the requirements of the job. As a result the scheduler creates a list of processing resources that match the job requirements.

In step 206 the scheduler applies the scheduling policy specified by the job to the list of matching resources. In this way a distinct data processing resource is selected from the list of matching resources. Finally, in step 208 the job is submitted from the scheduling policy to the selected data processing resource. The selected data processing resource then executes the job.

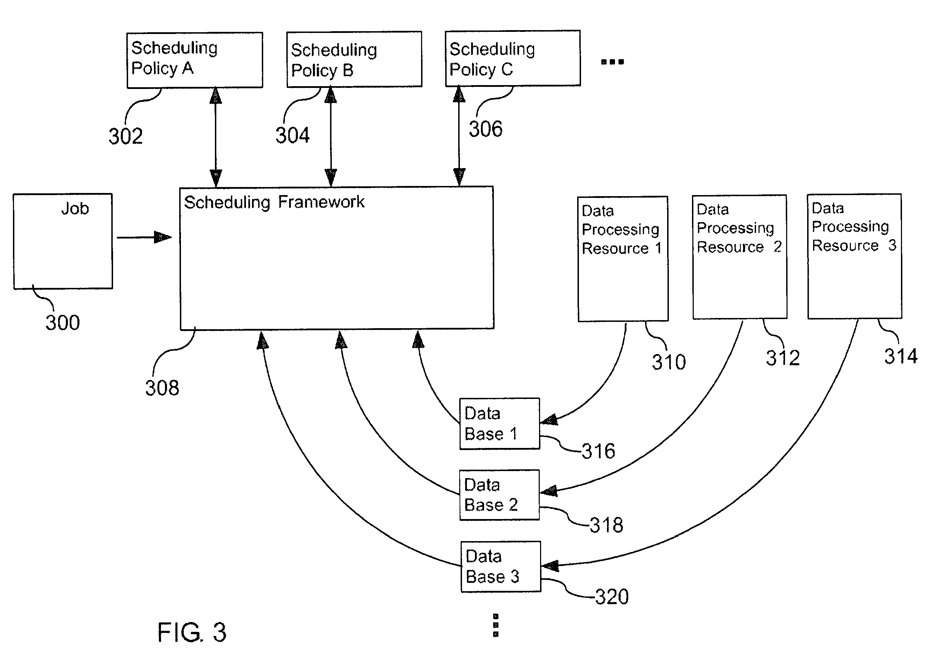

Figure 3 shows a block diagram of a preferred embodiment of the invention. The block diagram in figure 3 is similar to the block diagram in figure 1 apart from the fact that the central database 116 of figure 1 is replaced by several databases 316, 318 and 320 in figure 3.

A job 300 being specified by several job requirements is passed to a scheduling framework 308. The scheduling framework 308 has access to a scheduling policy A 302, a scheduling policy B 304 and a scheduling policy C306. The scheduling policy 302 has further access to various data processing resources 310, 312 and 314. Each data processing resource 310, 312 and 314 transmits its system specifications to a database 316, 318 and 320. In the shown embodiment the data processing resource 310 submits its system specifications to the database 316, the data processing resource 312 submits its system specifications to the database 318 and the data processing resource 314 submits its system specifications to the database 320.

Each of the databases 316, 318 and 320 provides the stored system specifications of the single data processing resources 310, 312 and 314 to the scheduling framework 308.

When a job 300 enters the scheduling framework 308 the scheduling framework 308 performs a request to the appropriate database. The required information is then sent from the data processing resources 310, 312 and 314 to the appropriate databases 316, 318 and 320. The databases 316, 318 and 320 then finally provide the required information to the scheduling framework 308. Depending on the requirement of the job 300 as well as on the selected scheduling policy and the information provided by the databases 316, 318 and 320, the scheduling framework 308 determines a single one or several of the data processing resources 310, 312 and 314 to which the job 300 has to be submitted. After the determination of a data processing resource, the scheduling framework 308 passes on this information and additional information to the scheduling policy 302, 304, or 306 and the scheduling policy 302, 304, or 306 submits the job 300 to the determined data processing resource in which the job 300 is processed.

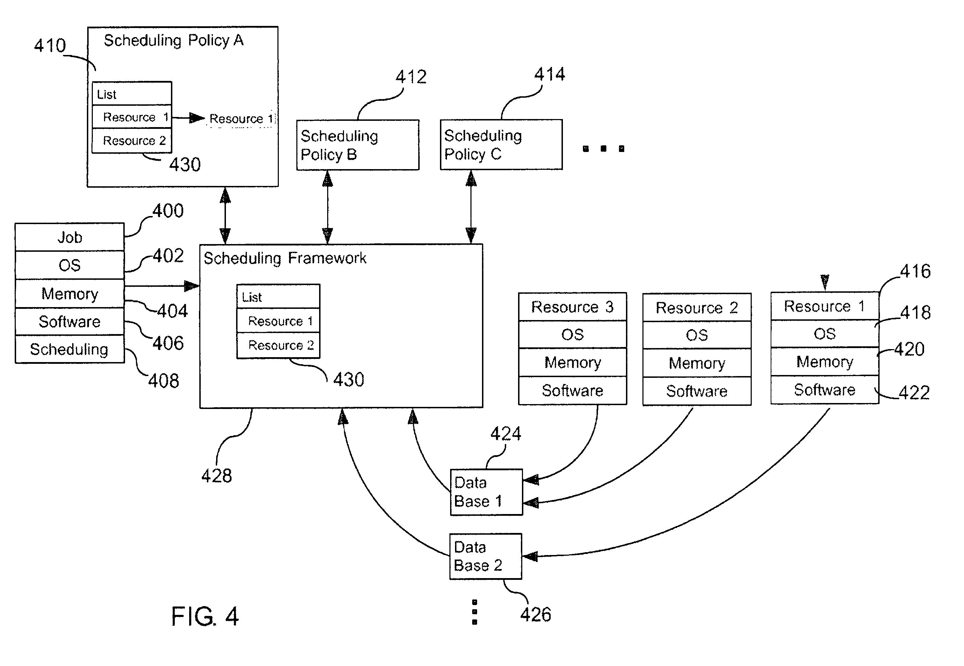

Figure 4 shows a detailed block diagram of a further preferred embodiment of the invention. A job 400 being specified by various job requirements such as an operation system 402, a memory 404, a software 406 and a scheduling policy 408, is submitted to a scheduling framework 428. The scheduling framework 428 has access to various scheduling policies 410, 412 and 414.

The resource 1 416 is specified by an operation system 418, by a memory 420 and a software configuration 422. The resource 1 416 is further connected to the database 426, whereas resource 1 and resource 2 are connected to database 424. Each of the databases 424 and 426 is separately connected to the scheduling framework 428.

The databases 424, 426 as well as additional databases can be dynamically attached to the scheduling framework 428 as well as dynamically detached from the scheduling framework 428. Depending on the job requirements the scheduling framework 428 performs a query to the databases 424, 426,... and obtains the required information from a single or from several databases of the databases 424, 426, ...

When for example the job 400 is specified by a scheduling policy 408 that corresponds to the scheduling policy A 410, the scheduling framework 428 selects the scheduling policy A 410 from the list of potential scheduling policies 410, 412 and 414 in order to perform the scheduling of the job 400.

When for example the required operation system 402 of the job 400 matches the operation system 418 of the resource 416 and the operation system of the resource 2, the required software 406 of the job 400 matches the software 422 of the resource 1 416 and the software of the resource 2, the required memory 404 of the job 400 matches the memory 420 of the resource 1 416 as well as the memory of the resource 2, then the scheduling framework creates a list of matching resources 430. In the example considered here, the list of resources 430 contains resource 1 and resource 2. Submission of the list of resources 430 to the selected scheduling policy 410, determines a distinct resource from the list of resources 430 to which the job 400 has to be submitted. The determination of the distinct resource depends on the scheduling policy, the list of resources and the system specification of the single resources provided by the databases 424, 426, ... The job is then submitted from the selected scheduling policy 410 to the determined resource 416.

In this way the assignment of a job 400 to a distinct data processing resource of a computational grid can universally be adapted according to various job requirements, in order to use and to exploit the computational capacity of a given computational grid as effective as possible.

### LIST OF REFERENCE NUMERALS

- 100: Job
- 102: Scheduling policy
- 104: Scheduling policy
- 106: Scheduling policy
- 108: Scheduling framework
- 110: Data processing resource
- 112: Data processing resource
- 114: Data processing resource
- 116: Database
- 300: Job
- 302: Scheduling policy
- 304: Scheduling policy
- 306: Scheduling policy
- 308: Scheduling framework
- 310: Data processing resource
- 312: Data processing resource
- 314: Data processing resource
- 316: Database
- 318: Database
- 320: Database
- 400: Job
- 402: Operation system
- 404: Memory
- 406: Software
- 408: Scheduling policy
- 410: Scheduling policy
- 412: Scheduling policy
- 414: Scheduling policy
- 416: Data processing resource
- 418: Operation system
- 420: Memory
- 422: Software
- 424: Database
- 426: Database
- 428: Scheduling framework
- 430: List of matching resources

## Claims

1. A method for scheduling a job (100; 200; 300), the job having at least one job requirement and being indicative of a scheduling policy (102; 302; 408) of at least first and second scheduling policies (102, 104, 106; 302, 304, 306; 408, 410, 412), the method comprising the steps of:
- performing a query in order to identify data processing resources (110, 112, 114; 310, 312, 314; 416) matching the at least one job requirement and obtaining input data for the selected scheduling policy (102; 302; 408),
- selecting one of the matching resources by means of the selected scheduling policy on the basis of the input data.

2. The method according to claim 1, the job requirements comprising a storage capacity (404), a computing power, an operation system (402) and / or a scheduling policy (408).

3. The method according to claim 1 or 2, the data processing resources (110, 112, 114; 310, 312, 314; 416) comprising specifications of storage capacity, computing power, operation system and / or resource availability.

4. The method according to claim 3, wherein the specifications of the data processing resources (110, 112, 114; 310, 312, 314; 416) are provided by at least one database 116.

5. The method according to any one of the claims 1 to 4, wherein the scheduling policies (102, 104, 106; 302, 304, 306; 408, 410, 412) are pluggable program modules.

6. The method according to any one of the claims 1 to 5, wherein a plurality of databases (316, 318, 320; 424, 426) provides specifications of the data processing resources, the databases being pluggable.

7. The method according to any one of the claims 1 to 6, wherein the scheduling policies (102, 104, 106; 302, 304, 306; 408, 410, 412) and / or the databases (316, 318, 320; 424, 426) are dynamically pluggable.

8. The method according to any one of the claims 1 to 7, wherein an additional query is performed in order to obtain additional input data required by the selected scheduling policy.

9. A scheduler for scheduling a job (100, 300, 400), the job having at least one job requirement and being indicative of a scheduling policy (102; 302; 408) of at least first and a second scheduling policies (102, 104, 106; 302, 304, 306; 408, 410, 412), the scheduler comprising:
- means for performing a query in order to identify data processing resources (110, 112, 114; 310, 312, 314; 416) matching the at least one job requirement and obtaining input data for the selected scheduling policy (102; 302; 408),
- means for selecting one of the matching resources by means of the selected scheduling policy (102; 302; 408) on the basis of the input data.

10. The scheduler according to claim 9, wherein specifications of the data processing resources (110, 112, 114; 310, 312, 314; 416) are provided by at least one database 116.

11. The scheduler according to claim 9 or 10, further comprising the scheduling policies (102, 104, 106; 302, 304, 306; 408, 410, 412) being pluggable program modules.

12. The scheduler according to claim 10 or 11, wherein a plurality of databases (316, 318, 320; 424, 426) provides specifications of the data processing resources (110, 112, 114; 310, 312, 314; 416), the databases (316, 318, 320; 424, 426) being pluggable to the scheduler.

13. The scheduler according to any one of the claims 9 to 12, wherein the scheduling policies (102, 104, 106; 302, 304, 306; 408, 410, 412) and / or the databases (316, 318, 320; 424, 426) are dynamically pluggable.

14. A network computer system comprising a plurality of data processing resources (110, 112, 114; 310, 312, 314; 416) with means for scheduling a job (100, 300, 400), the job having at least one job requirement and being indicative of a scheduling policy (102; 302; 408) of at least a first and a second scheduling policy (102, 104, 106; 302, 304, 306; 408, 410, 412), the network computer system comprising:
- means for performing a query in order to identify data processing resources (110, 112, 114; 310, 312, 314; 416) matching the at least one job requirement and obtaining input data for the selected scheduling policy (102; 302; 408),
- means for selecting one of the matching resources by means of the selected scheduling policy (102; 302; 408) on the basis of the input data.

15. The network computer system according to claim 14, wherein specifications of the data processing resources (110, 112, 114; 310, 312, 314; 416) are provided by a plurality of pluggable databases.

16. The network computer system according to claim 14 or 15, further comprising the scheduling policies (102, 104, 106; 302, 304, 306; 408, 410, 412) being pluggable program modules.

17. The network computer system according to any one of the claims 15 or 16, further comprising the scheduling policies (102, 104, 106; 302, 304, 306; 408, 410, 412) and the databases (316, 318, 320; 424, 426) being dynamically pluggable.

18. A computer program product for scheduling a job, the job having at least one job requirement and being indicative of a scheduling policy (102, 302, 408) of at least a first and a second scheduling policy (102, 104, 106; 302, 304, 306; 408, 410, 412), the computer program product comprising computer program means for:
- performing a query in order to identify data processing resources (110, 112, 114; 310, 312, 314; 416) matching the at least one job requirement and obtaining input data for the selected scheduling policy (102; 302; 408),
- selecting one of the matching resources by means of the selected scheduling policy (102; 302; 408) on the basis of the input data.

19. The computer program product according claim 18, wherein specifications of the data processing resources (110, 112, 114; 310, 312, 314; 416) are provided by a plurality of pluggable databases (316, 318, 320; 424, 426).

20. The computer program product according to claim 18 or 19, comprising the scheduling policies (102, 104, 106; 302, 304, 306; 408, 410, 412) being pluggable program modules, the scheduling policies and the databases (316, 318, 320; 424, 426) being dynamically pluggable.
